(19) **Europäisches Patentamt**
**European Patent Office**
**Office européen des brevets**

(11) **EP 3 002 560 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(51) Int Cl.:
*G01D 4/00* (2006.01)    *H04Q 9/00* (2006.01)
*H04W 56/00* (2009.01)    *H04W 52/02* (2009.01)
*H04W 72/04* (2009.01)

(21) Anmeldenummer: **15188008.5**

(22) Anmeldetag: **30.08.2012**

(54) **BATTERIEBETRIEBENE STATIONÄRE SENSORANORDNUNG MIT DRAHTLOSER UNIDIREKTIONALER DATENÜBERTRAGUNG**

BATTERY POWERED STATIONARY SENSOR ASSEMBLY WITH WIRELESS UNIDIRECTIONAL DATA TRANSMISSION

SYSTÈME DE DÉTECTION STATIONNAIRE FONCTIONNANT AVEC BATTERIE DOTÉ D'UNE TRANSMISSION DE DONNÉES UNIDIRECTIONNELLE ET SANS FIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.09.2011 DE 102011082098**

(43) Veröffentlichungstag der Anmeldung:
**06.04.2016 Patentblatt 2016/14**

(62) Dokumentnummer(n) der früheren Anmeldung(en) nach Art. 76 EPÜ:
**12768741.6 / 2 751 526**

(73) Patentinhaber: **Fraunhofer-Gesellschaft zur Förderung der angewandten Forschung e.V.
80686 München (DE)**

(72) Erfinder:
• **Bernhard, Josef**
**92507 Nabburg (DE)**
• **Kilian, Gerd**
**91056 Erlangen (DE)**

(74) Vertreter: **Hersina, Günter et al
Schoppe, Zimmermann, Stöckeler
Zinkler, Schenk & Partner mbB
Patentanwälte
Radlkoferstrasse 2
81373 München (DE)**

(56) Entgegenhaltungen:
**EP-B1- 1 246 501    US-A1- 2010 265 863
US-B2- 7 057 525**

**Beschreibung**

Ausführungsbeispiele der vorliegenden Erfindung beziehen sich auf eine batteriebetriebene stationäre Sensoranordnung mit unidirektionaler Datenübertragung. Weitere Ausführungsbeispiele der vorliegenden Erfindung beziehen sich auf ein hybrides Verfahren zur drahtlosen Übertragung burstartiger Datenpakete in einem stationären Mehrteilnehmersystem.

Bei der Übertragung von kleinen Datenmengen, z. B. von Sensordaten eines Heizungs-, Strom- oder Wasserzählers kann ein Funkübertragungssystem zum Einsatz kommen. Dabei ist an dem Sensor eine Messeinrichtung mit einem Datensender angebracht, der die Sensordaten drahtlos zu einem Datenempfänger überträgt.

In der US 7,057,525 B2 wird ein System zur unidirektionalen Zählerfernauslese mit zwei Einrichtungen beschrieben, eine Einrichtung, die kurze Sendepakete für den mobilen Empfang erzeugt und eine Einrichtung, die schmalbandige Sendepakete erzeugt, die über eine größere Distanz von einem stationären Empfänger empfangbar sind. Dabei unterscheiden sich die beiden ausgesendeten Signale lediglich in der Signalbandbreite.

In der EP 1 246 501 B1 werden Verbrauchswerte von einem Verbrauchsdatenerfassungsgerät mittels drahtloser Übertragung gesendet. Um die Dauer eines Aussendungszyklus zu verringern, sind die Verbrauchswerte zu Paketen zusammengefasst, wobei ein Paket nur einen Teil der gesamten Verbrauchswerte enthält. Die Anzahl der Verbrauchswerte in einem Paket ist hierbei durch die maximale Länge der Funktelegramme begrenzt.

Die US 7 057 525 B2 und US2010/0265863 beschäftigen sich ebenfalls mit der drahtlosen Übertragung von Datenpaketen. Das Ziel ist im Fall der US 7 057 525 B2 eine möglichst störungsfreie Datenübertragung, im Fall der US2010/0265863 eine möglichst energiesparende Datenübertragung. Der vorliegenden Erfindung liegt die Aufgabe zugrunde, ein Konzept zu schaffen, welches eine Erhöhung der Reichweite ermöglicht.

Diese Aufgabe wird durch die unabhängigen Patentansprüche gelöst.

Vorteilhafte Weiterbildungen finden sich in den abhängigen Patentansprüchen.

Die vorliegende Erfindung schafft eine batteriebetriebene stationäre Sensoranordnung mit unidirektionaler Datenübertragung. Die batteriebetriebene stationäre Sensoranordnung weist einen Sensor, eine Einrichtung zum Erzeugen von Datenpaketen und eine Einrichtung zum Senden von Datenpaketen auf. Der Sensor ist ausgebildet, um Sensordaten zu ermitteln und um ein Sensordatenpaket basierend auf den Sensordaten bereitzustellen, wobei die Sensordaten eine Datenmenge von weniger als 1 kbit aufweisen. Die Einrichtung zum Erzeugen von Datenpaketen ist ausgebildet, um das Sensordatenpaket in zumindest zwei Datenpakete aufzuteilen, wobei jedes der zumindest zwei Datenpakete kürzer ist als FH120812PEP-2015137978.DOC2015137978 das Sensordatenpaket. Die Einrichtung zum Senden von Datenpaketen ist ausgebildet, um die Datenpakete mit einer Datenrate von weniger als 50 kbit/s und einem zeitlichen Abstand über einen Kommunikationskanal zu senden.

Bei Ausführungsbeispielen wird das Sensordatenpaket in zumindest zwei Datenpakete aufgeteilt, wobei die Datenpakete mit einer Datenrate von weniger als 50 kbit/s und einem zeitlichen Abstand über den Kommunikationskanal gesendet werden. Im Vergleich zu einer herkömmlichen batteriebetriebenen stationären Sensoranordnung, bei der das Sensordatenpaket über den Kommunikationskanal mit einer Datenrate von z. B. 100 kbit/s übertragen wird, erhöht sich das SNR-Verhältnis (SNR = signal to noise ratio, dt. Signal-zu-Rausch-Verhältnis) am Datenempfänger und damit auch die Reichweite. Darüber hinaus wird durch die Aufteilung des Sensordatenpakets in die zumindest zwei Datenpakete und durch die Übertragung der zumindest zwei Datenpakete über den Kommunikationskanal mit einem zeitlichen Abstand zum einen die Batteriebelastung und zum anderen die Übertragungsfehlerwahrscheinlichkeit reduziert.

Ausführungsbeispiele der vorliegenden Erfindung werden nachfolgend unter Bezugnahme auf die beiliegenden Zeichnungen näher erläutert. Es zeigen:

Fig. 1    ein Blockschaltbild einer batteriebetriebenen stationären Sensoranordnung mit unidirektionaler Datenübertragung gemäß einem Ausführungsbeispiel der vorliegenden Erfindung;

Fig. 2    ein Blockschaltbild eines Systems mit einer batteriebetriebenen stationären Sensoranordnung und einem Datenempfänger gemäß einem Ausführungsbeispiel der vorliegenden Erfindung;

Fig. 3    ein Blockschaltbild eines Datenempfängers gemäß einem Ausführungsbeispiel der vorliegenden Erfindung;

Fig. 4    eine schematische Darstellung einer Verteilung von Datenpaketen auf unterschiedliche Sendefrequenzen gemäß einem Ausführungsbeispiel der vorliegenden Erfindung;

Fig. 5    eine zeitliche Auslastung eines Kommunikationskanals beim Aloha-Verfahren;

Fig. 6    in einem Diagramm verschiedene Möglichkeiten zur Erhöhung von $E_h/N_0$ bei einer Übertragung eines Telegramms gemäß einem Ausführungsbeispiel der vorliegenden Erfindung;

Fig. 7      ein Diagramm einer Wahrscheinlichkeit ein Telegramm zu empfangen als Funktion einer normierten Telegrammlänge;

Fig. 8      eine zeitliche Auslastung eines Kommunikationskanals bei einer Übertragung von n Datenpaketen gemäß einem Ausführungsbeispiel der vorliegenden Erfindung;

Fig. 9      ein Diagramm eine Wahrscheinlichkeit eines Telegrammfehlers in Abhängigkeit von der Anzahl an Datenpaketen für $f_N$=20, $D_{\sum X}$=0,2 und $P(XF_W)$=2,3·10^{-10};

Fig. 10     ein Diagramm der Wahrscheinlichkeit eines Telegrammfehlers in Abhängigkeit von der Anzahl an Datenpaketen für $f_N$=20, $D_{\sum X}$= 0,5 und $P(XF_W)$=1,0·10^{-4}; und

Fig. 11     ein Diagramm der Wahrscheinlichkeit eines Telegrammfehlers in Abhängigkeit von der Anzahl an Datenpaketen für $f_N$=20, $D_{\sum X}$=0,8 und $P(XF_W)$ =1,1·10^{-2}

In der nachfolgenden Beschreibung der Ausführungsbeispiele der Erfindung werden in den Figuren gleiche oder gleichwirkende Elemente mit dem gleichen Bezugszeichen versehen, so dass deren Beschreibung in den unterschiedlichen Ausführungsbeispielen untereinander austauschbar ist.

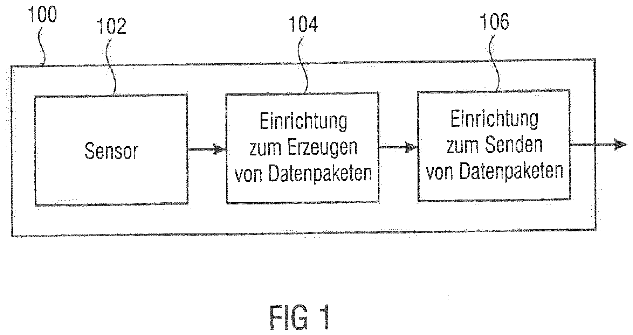

Fig. 1 zeigt ein Blockschaltbild einer batteriebetriebenen stationären Sensoranordnung 100 mit unidirektionaler Datenübertragung. Die batteriebetriebene stationäre Sensoranordnung 100 weist einen Sensor 102, eine Einrichtung 104 zum Erzeugen von Datenpaketen und eine Einrichtung 106 zum Senden von Datenpaketen auf. Der Sensor 102 ist ausgebildet, um Sensordaten zu ermitteln und um ein Sensordatenpaket basierend auf den Sensordaten bereitzustellen, wobei die Sensordaten eine Datenmenge von weniger als 1 kbit aufweisen. Die Einrichtung 104 zum Erzeugen von Datenpaketen ist ausgebildet, um das Sensordatenpaket in zumindest zwei Datenpakete aufzuteilen, wobei jedes der zumindest zwei Datenpakete kürzer ist als das Sensordatenpaket. Die Einrichtung 106 zum Senden von Datenpaketen ist ausgebildet, um die Datenpakete mit einer Datenrate von weniger als 50 kbit/s und einem zeitlichen Abstand über einen Kommunikationskanal zu senden.

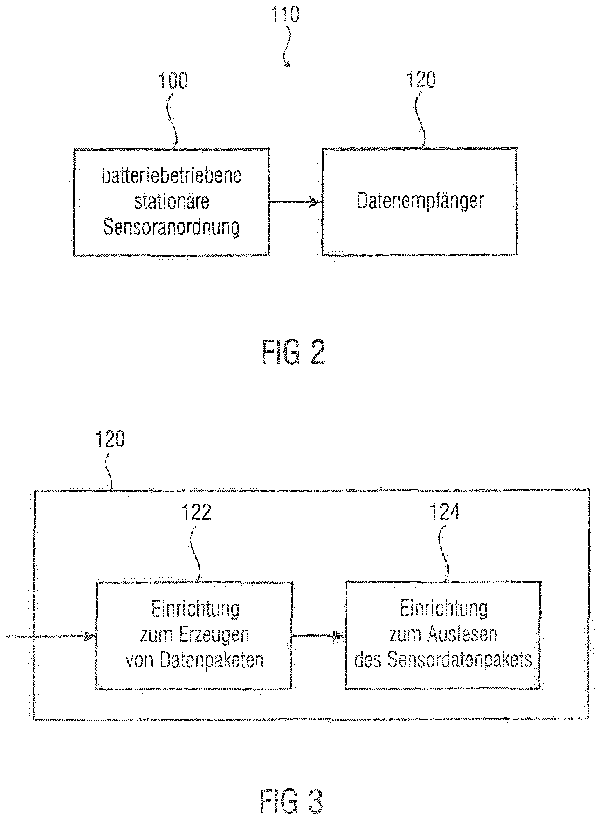

Bei Ausführungsbeispielen werden die Sensordaten zur Reichweitenerhöhung schmalbandig mit einer Datenrate von weniger als 50 kbit/s, z. B. mit 40 kbit/s, 30 kbit/s, 20 kbit/s oder 10 kbit/s, statt z. B. mit einer Datenrate von 100 kbit/s übertragen. In einem System 110 mit einer batteriebetriebenen stationären Sensoranordnung 100 (Datensender) mit unidirektionaler Datenübertragung (d. h. ohne Rückkanal) und einem Datenempfänger 120, wie z. B. in Fig. 2 gezeigt, erhöht sich das SNR-Verhältnis am Datenempfänger 120 und damit auch die Reichweite. Als Konsequenz erhöht sich allerdings die Bitdauer und somit erhöht sich die ausgesendete Energie pro Bit in dem erfindungsgemäßen System 110 mit der niedrigen Datenrate. Da die Batterie in dem System 110 zeitlich nicht lange beansprucht werden darf, sondern nur für kurze Zeit einen höheren Strom liefern kann, stellt die längere Bitdauer ein Problem dar. Um eine lange Batterielebensdauer zu gewährleisten, sollten nur kurze Bursts ausgesendet werden. Deshalb wird das schmalbandige Sensordatenpaket in kleinere Datenpakete (Teilpakete) unterteilt, um nur eine kurze pulsartige Belastung der Batterie zu erhalten. Ferner können die Datenpakete kanalcodiert sein, z. B. derart, dass nicht alle Datenpakete, sondern nur ein gewisser Anteil zum Decodieren der Informationen erforderlich ist.

Der Sensor 102 der batteriebetriebenen stationären Sensoranordnung 100 kann ein Sensor oder Zähler, wie z. B. ein Temperatursensor, Heizungs- Strom oder Wasserzähler sein, wobei die Sensordaten ein Sensorwert oder Zählerstand sein können. Das erfindungsgemäße System 110 mit der batteriebetriebenen stationären Sensoranordnung 100 (Datensender) und dem Datenempfänger 120 weist keinen Rückkanal auf. Der Datensender 100 kann die Sensordaten dabei zu einem pseudozufälligen Zeitpunkt aussenden, wobei der Datenempfänger 120 Sensordaten von mehreren (verschiedenen) Datensendern 100 empfangen kann.

Fig. 3 zeigt ein Blockschaltbild eines Datenempfängers 120 gemäß einem Ausführungsbeispiel der vorliegenden Erfindung. Der Datenempfänger 120 weist eine Einrichtung 122 zum Empfangen von Datenpaketen und eine Einrichtung 124 zum Auslesen des Sensordatenpakets auf. Die Einrichtung 122 zum Empfangen von Datenpaketen ist ausgebildet, um die zumindest zwei Datenpakete zu empfangen, und um die zumindest zwei Datenpakete zu kombinieren um das Sensordatenpaket zu ermitteln. Die Einrichtung 124 zum Auslesen des Sensordatenpakets ist ausgebildet, um die Sensordaten aus dem Sensordatenpaket zu ermitteln und um die Sensordaten der batteriebetriebenen stationären Sensoranordnung 100 zuzuordnen.

Zur Synchronisation des Datenpakets in dem Datenempfänger 120 kann die Einrichtung 104 zum Erzeugen von Datenpaketen der batteriebetriebenen stationären Sensoranordnung 100 ausgebildet sein, um eine Synchronisationssequenz in Teilsynchronisationssequenzen aufzuteilen, und um jedes Datenpaket mit einer der Teilsynchronisationssequenzen zu versehen.

Die Einrichtung 122 zum Empfangen der Datenpakete des Datenempfängers 120 kann dabei ausgebildet sein, um die Datenpakete in einem Empfangsdatenstrom basierend auf den Teilsynchronisationssequenzen zu lokalisieren, um die Datenpakete zu empfangen.

Zur Synchronisation der Datenpakete in dem Datenempfänger 120 können somit Synchronisationssequenzen genutzt werden. Synchronisationssequenzen sind deterministische oder pseudozufällige binäre Datenfolgen, z. B. PRBS-Sequenzen (PRBS = pseudo random bit stream, dt. pseudozufälliger Bitstrom), die zusammen mit den eigentlichen Nutzdaten bzw. Sensordaten in den Datenpaketen an den Datenempfänger 120 gesendet werden. Dem Datenempfänger 120 sind die Synchronisationssequenzen bekannt. Durch Korrelation des Empfangsdatenstroms mit der bekannten Synchronisationssequenz kann der Datenempfänger 120 die zeitliche Position der bekannten Synchronisationssequenz in dem Empfangsdatenstrom ermitteln. Dabei weist die Korrelationsfunktion an der Stelle der Synchronisationssequenz im Empfangsdatenstrom ein Korrelationspeak auf, der umso höher bzw. größer ist, desto besser der Empfangsdatenstrom mit der bekannten Synchronisationssequenz übereinstimmt. Um die burstartigen Datenpakete weiterhin kurz zu halten, kann zur Synchronisation auch die Synchronisationssequenz über die einzelnen kurzen Datenpakete verteilt werden, so dass das einzelne Datenpaket schlechtere Synchronisationseigenschaften aufweist, als die Synchronisation über mehrere Datenpakete. Um diesen Synchronisationseffekt zu nutzen, können die Zeitpunkte der aufeinanderfolgenden Datenpakete dem Datenempfänger 120 bekannt sein. Alternativ kann die Einrichtung zum Empfangen der Datenpakete des Datenempfängers 120 ausgebildet sein, um den zeitlichen Abstand der Datenpakete basierend auf den Teilsynchronisationssequenzen zu ermitteln, um die Teilsynchronisationssequenz in dem Empfangsdatenstrom zu lokalisieren. Da der Datensender 100 und der Datenempfänger 120 stationär sind und somit über einen langen Zeitraum unverändert bleiben, kann der Datenempfänger 120 ausgebildet sein, um über lernende Verfahren die Zeitabfolge der Datenpakete zu ermitteln.

Die Einrichtung 104 zum Erzeugen von Datenpaketen der batteriebetriebenen stationären Sensoranordnung 100 kann ausgebildet sein, um das Sensordatenpaket zusätzlich in zumindest drei Datenpakete aufzuteilen, wobei jedes der zumindest drei Datenpakete kürzer ist als das Sensordatenpaket. Ferner kann die Einrichtung 106 zum Senden von Datenpaketen der batteriebetriebenen stationären Sensoranordnung 100 ausgebildet sein, um die zumindest zwei Datenpakete mit einer ersten Senderfrequenz über den Kommunikationskanal zu senden, und um die zumindest drei Datenpakete mit einer zweiten Sendefrequenz über den Kommunikationskanal zu senden.

Die Einrichtung 122 zum Empfangen der Datenpakete des Datenempfängers 120 kann dabei ausgebildet sein, um die zumindest zwei Datenpakete auf einer ersten Sendefrequenz zu empfangen und/oder um die zumindest drei Datenpakete auf der zweiten Sendefrequenz zu empfangen, und um die zumindest zwei Datenpakete und/oder die zumindest drei Datenpakete zu kombinieren, um das Sensordatenpaket zu ermitteln.

Die Einrichtung 104 zum Erzeugen von Datenpaketen der batteriebetriebenen stationären Sensoranordnung 100 kann ferner ausgebildet sein, um die zumindest zwei Datenpakete mit einer ersten Code Rate (Informationsrate) zu codieren, und um die zumindest drei Datenpakete mit einer zweiten Code Rate (Informationsrate) zu codieren, wobei die erste Code Rate größer ist als die zweite Code Rate.

Um zusätzlich robust gegenüber Störungen oder existierenden bzw. anderen Systemen zu sein, können die Datenpakete auf unterschiedliche Übertragungsfrequenzen bzw. Sendefrequenzen (Kanäle) verteilt werden. Beispielsweise können die Datenpakete auf n = 2, n = 3, n = 4, n = 5, n = 10 oder n = 20 Kanäle verteilt werden.

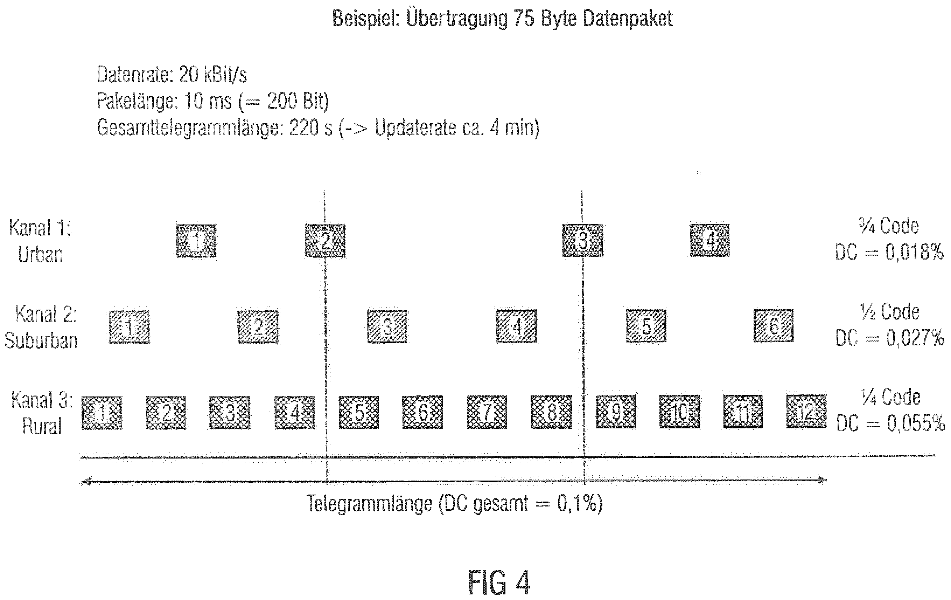

Fig. 4 zeigt eine schematische Darstellung einer Verteilung von Datenpaketen auf unterschiedliche Sendefrequenzen gemäß einem Ausführungsbeispiel der vorliegenden Erfindung. In Fig. 4 werden die Datenpakete beispielhaft auf drei Sendefrequenzen bzw. Frequenzkanäle aufgeteilt. Das zu übertragene Telegramm (Sensordatenpaket) weist beispielhaft eine Datenmenge von 75 Byte auf, wobei die Datenpakete beispielhaft mit einer Datenrate von 20 kbit/s über den Kommunikationskanal übertragen werden. Die Länge jedes Datenpakets beträgt dabei beispielsweise 10 ms (= 200 Bit), woraus sich eine Gesamttelegrammlänge von 220 s (Aktualisierungsrate bzw. Updaterate ca. 4 Minuten) ergibt.

In dem in Fig. 4 gezeigtem Ausführungsbeispiel ist die Einrichtung 104 zum Erzeugen von Datenpaketen der batteriebetriebenen stationären Sensoranordnung 100 ausgebildet, um das Sensordatenpaket in 12 Datenpakete aufzuteilen, um das Sensordatenpaket zusätzlich in 6 Datenpakete aufzuteilen, und um das Sensordatenpaket zusätzlich in 4 Datenpakete aufzuteilen. Ferner ist die Einrichtung 106 zum Senden der Datenpakete der batteriebetriebenen stationären Sensoranordnung 100 ausgebildet, um die 4 Datenpakete auf einer ersten Sendefrequenz (Kanal 1), die 6 Datenpakete auf einer zweiten Sendefrequenz (Kanal 2) und die 12 Datenpakete auf einer dritten Sendefrequenz (Kanal 3) zu senden.

Ferner können die Daten in den einzelnen Kanälen unterschiedlich codiert sein, um für verschiedene Anwendungsszenarien optimal zu sein. So könnte z. B. der Kanal 3 mit einer Rate von ¼ codiert sein, und häufiger Datenpakete auf diesem Kanal gesendet werden als im Kanal 1, indem weniger häufiger mit einer höheren Code Rate von z. B. ¾ gesendet wird. So wäre es möglich bei Störungen in dem einen oder anderen Kanal den jeweils anderen Kanal noch zu decodieren. Im ungestörten Fall würden die Datenpakete aller Kanäle MLE decodiert (MLE = maximum likelihood estimation, dt. Maximum-Likelihood-Schätzung) werden. Im ländlichen Umfeld, wo die Senderdichte geringer ist, würde mit der Code Rate und der hohen Paketsenderate eine hohe Reichweite erzielt werden können. Steigt die Senderdichte an, so kommt es in diesem Kanal zu vermehrter Kollision und Störungen. Bei hohen Senderdichten im urbanen Umfeld würde die geringere Senderate in Kanal 1 zu weniger Kollisionen führen, allerdings auch zu geringerer Reichweite aufgrund der höheren Code Rate. Allerdings ist bei hohen Senderdichten keine hohe Reichweite erforderlich, weil es aufgrund der vielen Kollisionen zu einer lastbedingten Reichweitenbegrenzung kommt. Lastbedingte Reichweitenbegrenzung bedeutet, dass aufgrund der auftretenden Kollisionen die stärkeren nahen Datensender (besserer Signal/Störabstand) codiert werden und die weiter entfernten, schwächeren Datensender überdeckt werden. Bei Ausführungsbeispielen kann es von Vorteil sein, bei hohen Senderdichten mit geringerer Code Rate zu senden, auch wenn dies zu einer höheren Latenz führt.

Im Folgenden werden die Verbesserungen und Vorteile der vorliegenden Erfindung gegenüber dem Stand der Technik näher beschrieben werden.

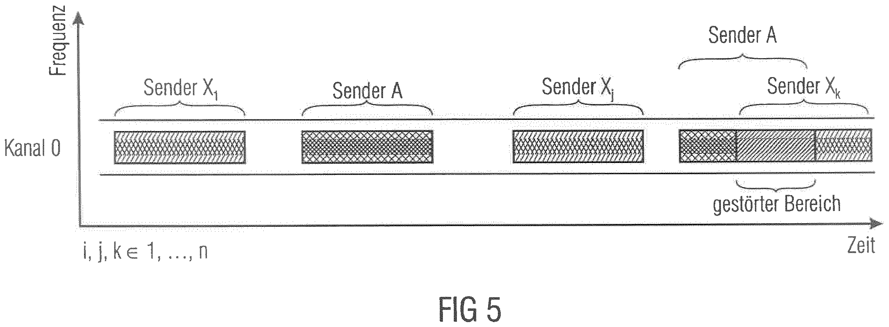

Fig. 5 zeigt eine zeitliche Auslastung eines Kommunikationskanals beim Aloha-Verfahren. Dabei beschreibt die Abzisse die Zeit und die Ordinate die Frequenz. Beim Aloha-Verfahren werden in einem Kanal von einem Datensender A Nutzdaten in sogenannten Telegrammen aufgeteilt in ein oder mehrere Datenpakete übertragen. Weiterhin übertragen im gleichen Kanal $n = 0$ andere Datensender $X_i$, $X_j$ und $X_k$, mit $i \in \{1,..,n\}$, $j \in \{1,...,n\}$ und $k \in \{1,...,n\}$ ebenfalls Datenpakete. Überlappt die Übertragung eines Datenpakets eines Datensenders X zeitlich die Aussendung eines Datenpakets vom Datensender A, so wird, wie in Fig. 5 gezeigt, die Übertragung des Datenpakets vom Datensender A gestört. Die Aussendung von Datenpaketen der Datensender X geschähe zufällig.

Die Länge der Datenpakete des Datensenders A betrage $T_A$, die der Datensender $X$, betrage $T_{X,i}$. Die Kanalbelegung eines einzelnen Datensenders $X_i$ ist durch das sogenannte Tastverhältnis (engt. duty cycle) des jeweiligen Datensenders $D_{X,i} = \tau/T \in [0,1]$ als Verhältnis der Sendezeit $\tau$ zur Betriebszeit $T$ definiert. Ein Datensender kann dabei den Senderzustand $S$ gleich ein (1) oder aus (0), also $S \in \{0,1\}$ annehmen. Die Wahrscheinlichkeit für eine ungestörte Übertragung kann zu

$$P(A_A) = e^{-\frac{(T_A + T_X)D_{\Sigma X}}{T_X}}$$

approximiert werden. Dabei ist $D_{\Sigma X} = kD_X$, das Summentastverhältnis der störenden Datensender X.

Für den Empfang einer Übertragung wird am Datenempfänger 120 prinzipiell ein von der verwendeten Modulation und Kanalcodierung abhängiges $E_b/N_0$ benötigt. $E_h$ bezeichnet dabei die Energie pro Bit, $N_0$ bezeichnet die Rauschleistungsdichte, die Leistung des Rauschens in einer normierten Bandbreite. Das SNR-Verhältnis (SNR = signal to noise ratio, dt. Signal-zu-Rausch-Verhältnis) ist definiert als

$$SNR = \frac{S}{N}$$

mit der Signalenergie S und der Rauschleistung $N$. Die Rauschleistung ist dabei auf eine bestimmte Bandbreite bezogen, es gilt $N = BN_0$ mit der Bandbreite $B$. Die Signalleistung berechnet sich zu $S = E_B D$. Es gilt damit

$$\frac{E_b}{N_0} = \frac{S}{N} \frac{B}{D}$$

oder

$$\frac{S}{N} = \frac{E_b}{N_0} \frac{D}{B}$$

mit der Datenrate $D$. Mit steigender Entfernung des Datenempfängers 120 zum Datensender A sinkt üblicherweise die empfangene Energie pro Bit $E_b$. Um nun die Reichweite einer Übertragung zu erhöhen, stehen prinzipiell verschiedene Möglichkeiten zur Verfügung.

Beispielsweise kann die Sendeleistung erhöht werden, womit auch die Energie pro Bit $E_h$ erhöht wird, was jedoch aus regulatorischer Sicht oft nicht anwendbar ist. Ferner kann eine Modulation oder Kanalcodierung mit geringem $E_b/N_0$ verwendet werden, wobei dies durch die Shannon Grenze begrenzt ist. Alternativ kann die Sendedauer des Telegramms (Sensordatenpakets) verlängert werden, wodurch die Datenrate verringert und die Energie pro Bit $E_b$ erhöht wird, was der im Folgenden beschriebene Ansatzpunkt ist.

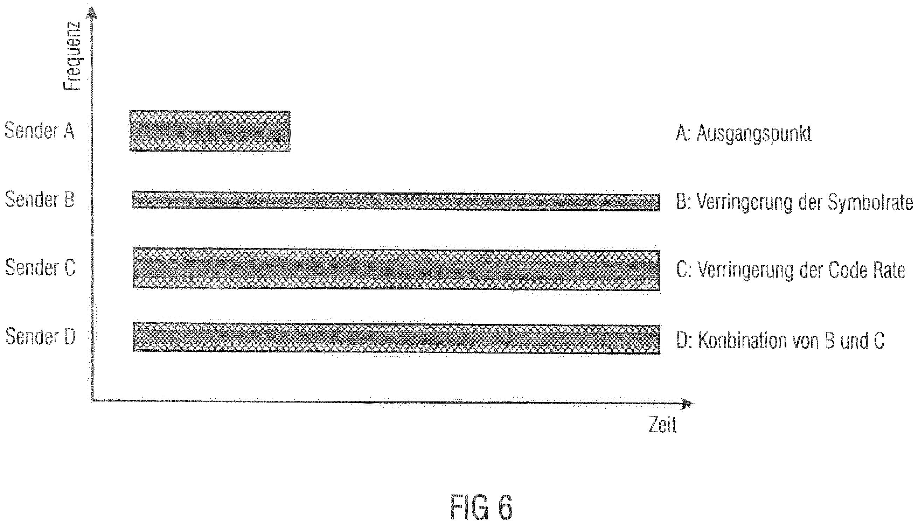

Fig. 6 zeigt in einem Diagramm verschiedene Möglichkeiten zur Erhöhung von $E_h/N_0$ bei einer Übertragung eines Telegramms (Sensordatenpakets) gemäß einem Ausführungsbeispiel der vorliegenden Erfindung. Dabei beschreibt die Abszisse die Zeit und die Ordinate die Frequenz. Eine Verringerung der Datenrate des Datensender A kann, wie in Fig. 6 illustriert, durch eine geringere Symbolrate (Sender B), durch die Verwendung einer geringeren Code Rate (Sender C) oder eine Kombination beider Wege (Sender D) erfolgen. Dadurch wird die benötigte Zeit für die Übertragung verlängert, der Datensender 100 kann so bei gleicher Sendeleistung und längerer Sendezeit mehr Energie abstrahlen.

Beispielsweise kann die Einrichtung zum Senden der Datenpakete ausgebildet sein, um die Datenpakete mit einer Symbolrate von weniger als $1{,}10^6$ Symbole/s oder auch weniger als $5.10^5$ Symbole/s, $3.10^5$ Symbole/s, $2.10^5$ Symbole/s bzw. $1.10^5$ Symbole/s, und/oder einer Code Rate von weniger als 0,8 oder auch weniger als 0,5, 0,3, 0,25, bzw. 0,1 zu versehen.

Wird eine geringere Code Rate verwendet, wird für eine Übertragung allgemein ein geringeres $E_b/N_0$ benötigt. Allerdings erhöht sich die benötigte Bandbreite im Vergleich zur Verwendung einer langsameren Modulation. In allen skizzierten Fällen wird die Aussendung verlängert. Dieses führt im Fall der Verringerung der Symbolrate mit

$$P(A_A) = e^{-\frac{(T_A + T_X)D_{\Sigma X}}{T_X}}$$

zu einer Verringerung der Übertragungswahrschcinlichkeit.

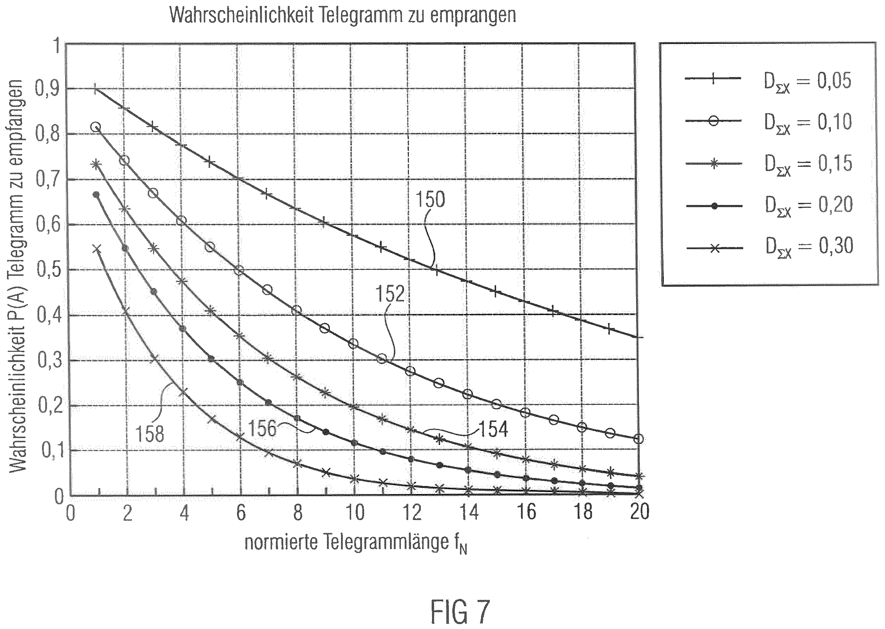

Fig. 7 zeigt ein Diagramm einer Wahrscheinlichkeit ein Telegramm (Sensordatenpaket) zu empfangen als Funktion einer normierten Telegrammlänge. Dabei beschreibt die Abszisse die normierte Telegrammlänge $f_N$ mit $f_N = T_A/T_X$ und die Ordinate die Wahrscheinlichkeit P(A) das Telegramm zu empfangen.

Eine erste Kurve 150 beschreibt die Wahrscheinlichkeit P(A), das Telegramm (Sensordatenpaket) zu empfangen, für $D_{\Sigma X} = 0,05$; eine zweite Kurve 152 beschreibt die Wahrscheinlichkeit P(A), das Telegramm zu empfangen, für $D_{\Sigma X} = 0,10$; eine dritte Kurve 154 beschreibt die Wahrscheinlichkeit P(A), das Telegramm zu empfangen, für $D_{\Sigma X} = 0,15$; eine vierte Kurve 156 beschreibt die Wahrscheinlichkeit P(A), das Telegramm zu empfangen, für $D_{\Sigma X} = 0,20$; und eine fünfte Kurve 158 beschreibt die Wahrscheinlichkeit P(A), das Telegramm zu empfangen, für $D_{\Sigma X} = 0,30$.

In Fig. 7 ist zu erkennen, dass die Wahrscheinlichkeit *P(A),* das Telegramm (Sensordatenpaket) zu empfangen, mit steigender Telegrammlänge abfällt. Ferner fällt die Wahrscheinlichkeit *P(A),* das Telegramm zu empfangen, mit steigendem Summentastverhältnis $D_{\Sigma X}$. Zur Erhöhung der Reichweite ist jedoch eine Verlängerung der Sendedauer des Telegramms (Sensordatenpakets) bzw. eine Verringerung der Datenrate erforderlich.

Bei Ausführungsbeispielen wird das Sensordatenpaket in zumindest zwei Datenpakete aufgeteilt, wobei die Datenpakete mit einer Datenrate von weniger als 50 kbit/s und einem zeitlichen Abstand über den Kommunikationskanal gesendet werden. Durch die Aufteilung des Sensordatenpakets in die zumindest zwei Datenpakete und durch die Übertragung der zumindest zwei Datenpakete über den Kommunikationskanal mit einem zeitlichen Abstand wird zum einen die Batteriebelastung und zum anderen die Übertragungsfehlerwahrscheinlichkeit reduziert, wie im Folgenden ausgeführt wird.

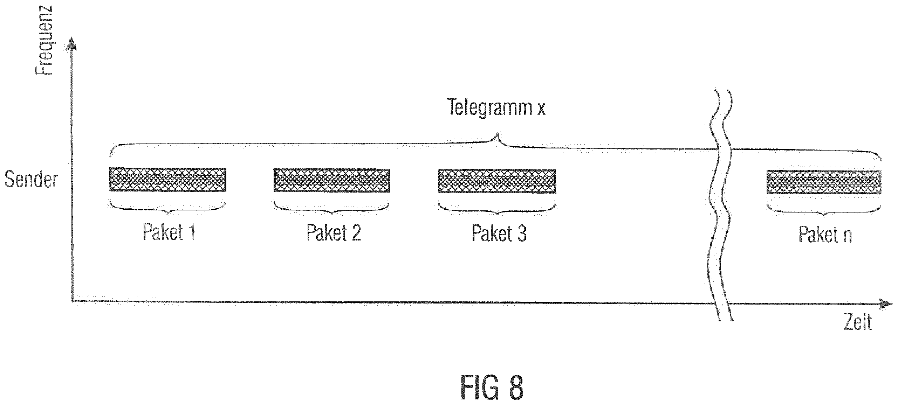

Das Telegramm (Sensordatenpaket) kann, wie beispielsweise in Fig. 8 illustriert, mit Hilfe mehrerer n (gleichgroßer) Datenpakete übertragen werden. Wird ein idealer Code angenommen, so müssen am Datenempfänger 120 bei Verwendung der Code Rate *c* mindestens $\lceil cn \rceil$ Datenpakete fehlerfrei empfangen werden, damit das Telegramm (Sensordatenpaket) fehlerfrei rekonstruierbar ist. Damit berechnet sich mit der Paketfehlerwahrscheinlichkeit *P(PF)* die Wahrscheinlichkeit für einen Telegrammfehler *P(TF)* mit $p = 1 - P(PF)$ zu

$$P(TF) = P(X < \lceil cn \rceil) = \sum_{k=0}^{\lceil cn \rceil - 1} (1-p)^{n-k} p^k \binom{n}{k}$$

Für die folgenden Betrachtungen wird davon ausgegangen, dass die ausgesendeten Datenpakete zu zufälligen Zeitpunkten ausgesendet werden. Ferner wird im Folgendem die Annahme gemacht, dass ein System X bereits in Betrieb ist. Die Aussendungen sollen zufällig erfolgen, die Datenmenge sei konstant für alle Datensender des Systems X, $T_X$ sei die Sendedauer jedes Datensenders des Systems X. $D_{\Sigma X}$ sei das summierte Tastverhältnis aller Datensender des Systems X.

Es soll nun ein weiterer Datensender A betrieben werden, wobei sich der Datensender A auf die batteriebetriebene stationäre Sensoranordnung 100 bezieht. Der Datensender A wird von Aussendungen des bestehenden Systems X gestört. Datensender A soll die gleiche Datenmenge wie im System X übertragen sowie die gleiche Modulation verwenden.

Die Reichweite des Datensenders A soll gegenüber dem bestehenden System X durch die Erhöhung von $E_h$

um den Faktor $f_N$ vergrößert werden. Damit verlängert sich die Sendedauer des Telegramms um den Faktor $f_N$. Ein Telegramm wird in $n$ einzelne Datenpakete aufgeteilt übertragen. $T_T$ sei die gesamte Sendedauer eines Telegramms, $T_P = T_T / n$ sei die Sendedauer eines Datenpakets. Damit ergibt sich für die Paketfehlerrate

$$P(PF) = 1 - e^{\frac{(T_P + T_X)D_{\Sigma X}}{T_X}} = 1 - e^{\frac{(\frac{T_T}{n} + T_X)D_{\Sigma X}}{T_X}} = 1 - e^{\frac{(\frac{fT_X}{n} + T_X)D_{\Sigma X}}{T_X}} = 1 - e^{-(\frac{f_N}{n}+1)D_{\Sigma X}} .$$

Danach steigt die Wahrscheinlichkeit eines Paketfehlers mit größerem $f_N$ und sinkt mit größerem $n$, sie ist unabhängig von der Code Rate $c$.

Ein Datensender vom System X kann $f_N$ Telegramme während der Sendezeit, die der Datensender A für ein Telegramm benötigt, senden. Dadurch erhöht sich die Wahrscheinlichkeit, dass ein Telegramm eines Senders X in der Zeit übertragen werden kann, in der der Datensender A ein Telegramm überträgt.

Die Wahrscheinlichkeit für den Datensender X mit $f_N$ übertragenen Telegrammen, bei welchem jedes eine Fehlerwahrscheinlichkeit von $P(XF)$ hat, keines zu empfangen, berechet sich wie bei einem Wiederholungscode zu

$$P(XF_W) = P(XF)^{f_N} .$$

Die auf die Datensender vom System X normierte Bandbreite vom Datensender A berechnet sich zu

$$b_N = \frac{f_N}{c} .$$

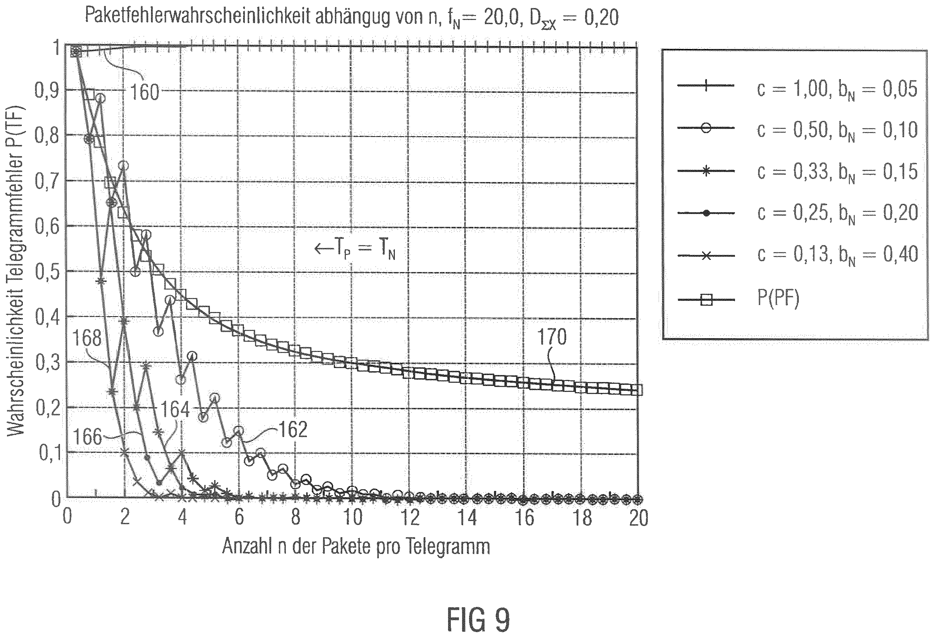

Fig. 9 zeigt ein Diagramm eine Wahrscheinlichkeit eines Telegrammfehlers in Abhängigkeit von der Anzahl an Datenpaketen für $f_N = 20$, $D_{\Sigma X} = 0,2$ und $P(XF_W) = 2,3 \cdot 10^{-10}$ Eine erste Kurve 160 beschreibt die Wahrscheinlichkeit eines Telegrammfehlers für $c = 1$ und $b_N = 0,05$; eine zweite Kurve 162 beschreibt die Wahrscheinlichkeit eines Telegrammfehlers für $c = 0,5$ und $b_N = 0,1$; eine dritte Kurve 164 beschreibt die Wahrscheinlichkeit eines Telegrammfehlers für $c = 0,33$ und $b_N = 0,15$; eine vierte Kurve 166 beschreibt die Wahrscheinlichkeit eines Telegrammfehlers für $c = 0,25$ und $b_N = 0,20$; eine fünfte Kurve 168 beschreibt die Wahrscheinlichkeit eines Telegrammfehlers für $c = 0,13$ und $b_N = 0,4$; und eine sechste Kurve 170 beschreibt die Paketfehlerrate $P(PF)$.

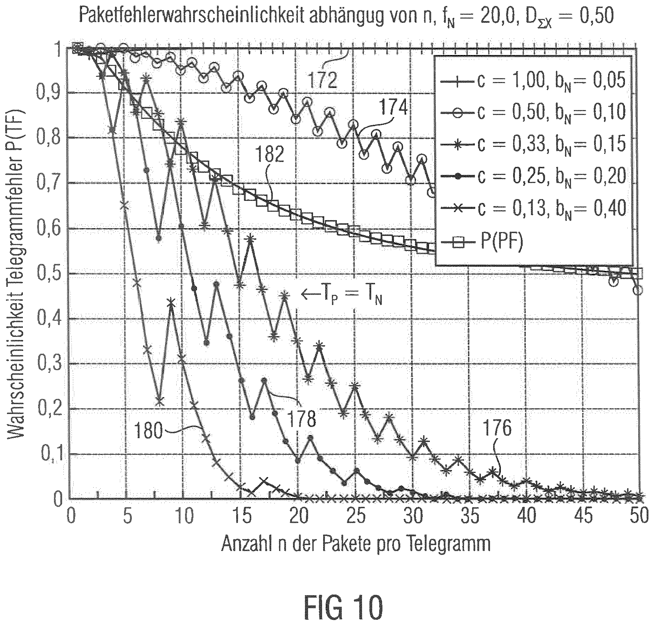

Fig. 10 zeigt ein Diagramm der Wahrscheinlichkeit eines Telegrammfehlers in Abhängigkeit von der Anzahl an Datenpaketen für $f_N = 20$, $D_{\Sigma X} = 0,5$ und $P(XF_W) = 1,0 \cdot 10^{-4}$. Eine erste Kurve 172 beschreibt die Wahrscheinlichkeit eines Telegrammfehlers für $c = 1$ und $b_N = 0,05$; eine zweite Kurve 174 beschreibt die Wahrscheinlichkeit eines Telegrammfehlers für $c = 0,5$ und $b_N = 0,1$; eine dritte Kurve 176 beschreibt die Wahrscheinlichkeit eines Telegrammfehlers für $c = 0,33$ und $b_N = 0,15$; eine vierte Kurve 178 beschreibt die Wahrscheinlichkeit eines Telegramfehlers für $c = 0,25$ und $b_N = 0,20$; eine fünfte Kurve 180 beschreibt die Wahrscheinlichkeit eines Telegrammfehlers für $c = 0,13$ und $b_N = 0,4$; und eine sechste Kurve 182 beschreibt die Paketfehlerrate $P(PF)$.

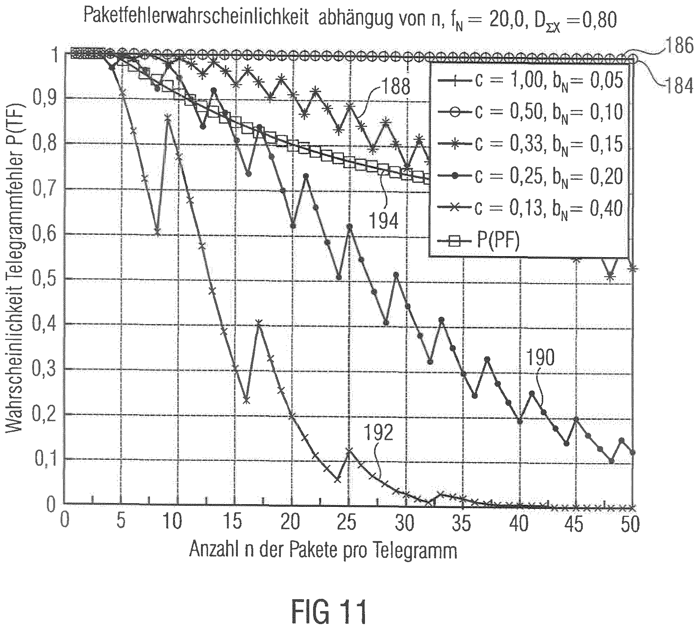

Fig. 11 zeigt ein Diagramm der Wahrscheinlichkeit eines Telegrammfehlers in Abhängigkeit von der Anzahl an Datenpaketen für $f_N = 20$, $D_{\Sigma X} = 0,8$ und $P(XF_W) = 1,1 \cdot 10^{-2}$. Eine erste Kurve 184 beschreibt die Wahrscheinlichkeit eines Telegrammfehlers für $c = 1$ und $b_N = 0,05$; eine zweite Kurve 186 beschreibt die Wahrscheinlichkeit eines Telegrammfehlers für $c = 0,5$ und $b_N = 0,1$; eine dritte Kurve 188 beschreibt die Wahrscheinlichkeit eines Telegrammfehlers für $c = 0,33$ und $b_N = 0,15$; eine vierte Kurve 190 beschreibt die Wahrscheinlichkeit eines Telegrammfehlers für $c = 0,25$ und $b_N = 0,20$; eine fünfte Kurve 192 beschreibt die Wahrscheinlichkeit eines Telegrammfehlers für $c = 0,13$ und $b_N = 0,4$; und eine sechste Kurve 194 beschreibt die Paketfehlerrate $P(PF)$.

In den Fig. 9 bis 11 ist zu erkennen, dass eine Aufteilung des Telegramms (Sensordatenpakets) in zumindest zwei Datenpakete, die mit einer Vorwärtsfehlerkorrektur (engl. forward error correction code) geschützt sind, die Übertragungswahrscheinlichkeit erhöht. Dieses kann auch unter dem Aspekt "Zeitdiversity" gesehen werden. Dies ist die Grundlage des erfindungsgemäßen Konzepts, das Telegramm bzw. Sensordatenpaket mit einer Vorwärtsfehlerkorrektur zu versehen und in zumindest zwei Datenpakete aufzuteilen und diese zu pseudozufälligen Zeitpunkten zu übertragen. Dabei werden die Aussendungen der batteriebetriebenen stationären Sensoranordnung 100 länger gemacht (Datenrate verringert), um die Reichweite zu erhöhen. Mit dem skizzierten Verfahren wird dem normalerweise damit eingehendem Sinken der Übertragungssicherheit entgegengewirkt.

Bei Ausführungsbeispielen wird somit die Reichweite durch eine schmalbandigere Übertragung und zusätzliche Kanalcodierung erhöht. Ferner werden zur Verbesserung der Übertragungssicherheit (Störung durch andere Systeme) und zur geringeren Belastung der Batterie die schmalbandigen Sensordatenpakete in mehrere kurze Datenpakete aufgeteilt. Die Datenpakete können auch zusätzlich auf verschiedenen Frequenzbändern übertragen werden (engl. frequency hopping). Darüber hinaus werden zur besseren Synchronisation kurze Synchronisationssequenzen verwendet.

Weitere Ausführungsbeispiele der vorliegenden Erfindung schaffen ein Verfahren zum Senden eines Sensordatenpakets in einer batteriebetriebenen stationären Sensoranordnung mit unidirektionaler Datenübertragung. In einem ersten Schritt werden mit einem Sensor Sensordaten ermittelt und ein Sensordatenpaket basierend auf den Sensordaten bereitgestellt, wobei die Sensordaten eine Datenmenge von weniger als 1 kbit aufweisen. In einem zweiten Schritt werden Datenpakete erzeugt, wobei bei der Erzeugung von Datenpaketen das Sensordatenpaket in zumindest zwei Datenpakete aufgeteilt wird, und wobei jedes der zumindest zwei Datenpakete größer ist als das Sensordatenpaket. In einem dritten Schritt werden die zumindest zwei Datenpakete mit einer Datenrate von weniger als 50 kbit/s und einem zeitlichen Abstand über einen Kommunikationskanal gesendet.

Weitere Ausführungsbeispiele der vorliegenden Erfindung beziehen sich auf ein drahtloses unidirektionales Übertragungsverfahren für Anwendungsgebiete mit einem stationären Datensender 100 und einem stationären Datenempfänger 120, wobei der Datenempfänger vergleichsweise länger Zeit hat, um die Daten zu empfangen.

Gemäß einem ersten Aspekt kann eine batteriebetriebene stationäre Sensoranordnung mit unidirektionaler Datenübertragung folgende Merkmale aufweisen: einen Sensor zum Ermitteln von Sensordaten und zum Bereitstellen eines Sensordatenpakets basierend auf den Sensordaten, wobei die Sensordaten eine Datenmenge von weniger als 1 kbit aufweisen; eine Einrichtung zum Erzeugen von Datenpaketen, die ausgebildet ist, um das Sensordatenpaket in zumindest zwei Datenpakete aufzuteilen, wobei jedes der zumindest zwei Datenpakete kürzer ist als das Sensordatenpaket; und eine Einrichtung zum Senden von Datenpaketen, die ausgebildet ist, um die Datenpakete mit einer Datenrate von weniger als 50 kbit/s und einem zeitlichen Abstand über einen Kommunikationskanal zu senden.

Gemäß einem zweiten Aspekt unter Bezugnahme auf den ersten Aspekt kann bei der batteriebetriebenen stationären Sensoranordnung die Einrichtung zum Senden der Datenpakete ausgebildet sein, um den zeitlichen Abstand der Datenpakete derart zu wählen, dass eine Batteriebelastung der batteriebetriebenen stationären Sensoranordnung reduziert ist. Gemäß einem dritten Aspekt unter Bezugnahme auf zumindest einen des ersten bis zweiten Aspekts kann bei der batteriebetriebenen stationären Sensoranordnung die Einrichtung zum Erzeugen von Datenpaketen ausgebildet sein, um eine Synchronisationssequenz in Teilsynchronisationssequenzen aufzuteilen, und um jedes Datenpaket mit einer der Teilsynchronisationssequenzen zur Synchronisation des Datenpakets in einem Datenempfänger zu versehen.

Gemäß einem vierten Aspekt unter Bezugnahme auf zumindest einen des ersten bis dritten Aspekts kann bei der batteriebetriebenen stationären Sensoranordnung die Einrichtung zum Senden der Datenpakete ausgebildet sein, um die Datenpakete mit einer Symbolrate von weniger als $10^6$ Symbole/s und/oder einer Code Rate von weniger als 0,8 zu versehen.

Gemäß einem fünften Aspekt unter Bezugnahme auf zumindest einen des ersten bis vierten Aspekts kann bei der batteriebetriebenen stationären Sensoranordnung die Einrichtung zum Erzeugen von Datenpaketen ausgebildet sein, um das Sensordatenpaket zusätzlich in zumindest drei Datenpakete aufzuteilen, wobei jedes der zumindest drei Datenpakete kürzer ist als das Sensordatenpaket; und kann die Einrichtung zum Senden von Datenpaketen ausgebildet sein, um die zumindest zwei Datenpakete mit einer ersten Sendefrequenz über den Kommunikationskanal zu senden, und um die zumindest drei Datenpakete mit einer zweiten Sendefrequenz über den Kommunikationskanal zu senden.

Gemäß einem sechsten Aspekt unter Bezugnahme auf den fünften Aspekt kann bei der batteriebetriebenen stationären Sensoranordnung die Einrichtung zum Erzeugen von Datenpaketen ausgebildet sein, um die zumindest zwei Datenpakete mit einer ersten Code Rate zu codieren, und um die zumindest drei Datenpakete mit einer zweiten Code Rate zu codieren, wobei die erste Code Rate größer ist als die zweite Code Rate.

Gemäß einem siebten Aspekt unter Bezugnahme auf zumindest einen des ersten bis sechsten Aspekts kann bei der batteriebetriebenen stationären Sensoranordnung die Einrichtung zum Senden der Datenpakete ausgebildet sein, um die Datenpakete mit einer Datenrate von weniger als 10 kbit/s zu senden.

Gemäß einem achten Aspekt kann bei einem System mit einer batteriebetriebenen stationären Sensoranordnung unter Bezugnahme auf zumindest einen des ersten bis siebten Aspekts und einem Datenempfänger zum Empfangen des Sensordatenpakets der Datenempfänger folgende Merkmale aufweisen: eine Einrichtung zum Empfangen von Datenpaketen, die ausgebildet ist, um die zumindest zwei Datenpakete zu empfangen, und um die zumindest zwei Datenpakete zu kombinieren um das Sensordatenpaket zu ermitteln; und eine Einrichtung zum Auslesen des Sensordatenpakets, die ausgebildet ist, um die Sensordaten aus dem Sensordatenpaket zu ermitteln und um die Sensordaten der batteriebetriebenen stationären Sensoranordnung zuzuordnen.

Gemäß einem neunten Aspekt unter Bezugnahme auf den achten Aspekt können bei dem System die zumindest zwei Datenpakete jeweils eine Teilsynchronisationssequenz zur Synchronisation des Datenpakets in dem Datenempfänger aufweisen; und kann die Einrichtung zum Empfangen der Datenpakete ausgebildet sein, um die Datenpakete in einem Empfangsdatenstom basierend auf den Teilsynchronisationssequenzen zu lokalisieren, um die Datenpakete zu empfangen.

Gemäß einem zehnten Aspekt unter Bezugnahme auf den neunten Aspekt kann die Einrichtung zum Empfangen der Datenpakete ausgebildet sein, um den zeitlichen Abstand der Datenpakete basierend auf den Teilsynchronisationssequenzen zu ermitteln, um die Teilsynchronisationssequenzen in dem Empfangsdatenstrom zu lokalisieren.

Gemäß einem elften Aspekt unter Bezugnahme auf zumindest einen des achten bis zehnten Aspekts kann bei dem System das Sensordatenpaket in zumindest zwei Datenpakete aufgeteilt mit einer ersten Sendefrequenz und zusätzlich in zumindest drei Datenpakete aufgeteilt mit einer zweiten Sendefrequenz über den Kommunikationskanal gesendet werden; kann die Einrichtung zum Empfangen der Datenpakete ausgebildet sein, um die zumindest zwei Datenpakete auf einer ersten Sendefrequenz zu empfangen und/oder um die zumindest drei Datenpakete auf der zweiten Sendefrequenz zu empfangen, und um die zumindest zwei Datenpakete und/oder die zumindest drei Datenpakete zu kombinieren um das Sensordatenpaket zu ermitteln.

Gemäß einem zwölften Aspekt unter Bezugnahme auf den elften Aspekt können die zumindest zwei Datenpakete mit einer ersten Code Rate codiert und die zumindest drei Datenpakete mit einer zweiten Code Rate codiert über den Kommunikationskanal gesendet werden; kann die Einrichtung zum Empfangen der Datenpakete ausgebildet sein, um die zumindest zwei Datenpakete zu dekodieren und/oder um die zumindest drei Datenpakete zu decodieren.

Gemäß einem dreizehnten Aspekt kann ein Verfahren zum Senden eines Sensordatenpakets in einer batteriebetriebenen stationären Sensoranordnung mit unidirektionaler Datenübertragung folgende Schritte aufweisen: Ermitteln von Sensordaten mit einem Sensor und Bereitstellen eines Sensordatenpakets basierend auf den Sensordaten, wobei die Sensordaten eine Datenmenge von weniger als 1 kbit aufweisen; Erzeugen von Datenpaketen, wobei bei der Erzeugung von Datenpaketen das Sensordatenpaket in zumindest zwei Datenpakete aufgeteilt wird, und wobei jedes der zumindest zwei Datenpakete kürzer ist als das Sensordatenpaket; und Senden der zumindest zwei Datenpakete mit einer Datenrate von weniger als 50 kbit/s und einem zeitlichen Abstand über einen Kommunikationskanal.

Gemäß einem vierzehnten Aspekt kann ein Computerprogramm einen Programmcode zur Durchführung des Verfahrens gemäß dem dreizehnten Aspekt aufweisen, wenn das Computerprogramm auf einem Computer oder Mikroprozessor abläuft.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Drahtloses unidirektionales Übertragungsverfahren, aufweisend:

    Ermitteln von Sensordaten mit einem Sensor (102);
    Bereitstellen eines Sensordatenpakets basierend auf den Sensordaten, wobei die Sensordaten eine Datenmenge von weniger als 1 kbit aufweisen;
    Erzeugen von Datenpaketen, wobei bei der Erzeugung von Datenpaketen das Sensordatenpaket in zumindest drei Datenpakete aufgeteilt wird, wobei jedes der zumindest drei Datenpakete kürzer ist als das Sensordatenpaket; und
    Senden der Datenpakete mit einer Datenrate von weniger als 50 kbit/s und einem zeitlichen Abstand über einen Kommunikationskanal;
    wobei bei dem Erzeugen von Datenpaketen die zumindest drei Datenpakete derart kanalcodiert werden, dass nur ein Anteil der Datenpakete zum Decodieren des Sensordatenpakets erforderlich ist.

2. Drahtloses unidirektionales Übertragungsverfahren nach dem vorhergehenden Anspruch, wobei bei dem Senden der Datenpakete der zeitliche Abstand der Datenpakete derart gewählt wird, dass eine Batteriebelastung einer batteriebetriebenen stationären Sensoranordnung reduziert ist.

3. Drahtloses unidirektionales Übertragungsverfahren nach einem der vorhergehenden Ansprüche, wobei bei dem Senden der Datenpakete die Datenpakete mit einer Symbolrate von weniger als $10^6$ Symbole/s und/oder einer Code Rate von weniger als 0,8 versehen werden.

4. Drahtloses unidirektionales Übertragungsverfahren nach einem der vorhergehenden Ansprüche, wobei bei dem Erzeugen von Datenpaketen das Sensordatenpaket zusätzlich in zumindest zwei Datenpakete aufgeteilt wird, wobei jedes der zumindest zwei Datenpakete kürzer ist als das Sensordatenpaket; und
    wobei bei dem Senden von Datenpaketen die zumindest zwei Datenpakete mit einer ersten Sendefrequenz über den Kommunikationskanal gesendet werden, und die zumindest drei Datenpakete mit einer zweiten Sendefrequenz über den Kommunikationskanal gesendet werden.

5. Drahtloses unidirektionales Übertragungsverfahren nach Anspruch 4, wobei bei dem Erzeugen von Datenpaketen die zumindest zwei Datenpakete mit einer ersten Code Rate codiert werden und die zumindest drei Datenpakete mit einer zweiten Code Rate codiert werden, wobei die erste Code Rate größer ist als die zweite Code Rate.

6. Drahtloses unidirektionales Übertragungsverfahren nach einem der vorhergehenden Ansprüche, wobei bei dem Erzeugen von Datenpaketen eine Synchronisationssequenz über die Datenpakete verteilt wird, so dass ein einzelnes Datenpaket schlechtere Synchronisationseigenschaften aufweist, als eine Synchronisation über mehrere Datenpakete.

7. Drahtloses unidirektionales Übertragungsverfahren nach einem der vorhergehenden Ansprüche, wobei die Datenpakete auf unterschiedliche Sendefrequenzen verteilt werden, um robust gegenüber Störungen oder anderen Systemen zu sein.

8. Drahtloses unidirektionales Übertragungsverfahren nach einem der vorhergehenden Ansprüche, wobei das Verfahren ferner folgende Schritte aufweist:

   Empfangen von Datenpaketen, wobei bei dem Empfangen von Datenpaketen zumindest zwei Datenpakete empfangen werden und die zumindest zwei Datenpakete kombiniert werden um das Sensordatenpaket zu ermitteln; und
   Auslesen des Sensordatenpakets um die Sensordaten aus dem Sensordatenpaket zu ermitteln und um die Sensordaten einer batteriebetriebenen stationären Sensoranordnung zuzuordnen.

9. Drahtloses unidirektionales Übertragungsverfahren nach Anspruch 8, wobei bei dem Erzeugen von Datenpaketen eine Synchronisationssequenz über die Datenpakete verteilt wird, so dass ein einzelnes Datenpaket eine kurze Synchronisationssequenz mit schlechteren Synchronisationseigenschaften aufweist, als eine Synchronisation über mehrere Datenpakete
   wobei bei dem Empfangen der Datenpakete die Datenpakete in einem Empfangsdatenstrom basierend auf den kurzen Synchronisationssequenzen lokalisiert werden, um die Datenpakete zu empfangen.

10. Drahtloses unidirektionales Übertragungsverfahren nach Anspruch 9, wobei bei dem Empfangen der Datenpakete der zeitliche Abstand der Datenpakete basierend auf den kurzen Synchronisationssequenzen ermittelt wird, um die kurzen Synchronisationssequenzen in dem Empfangsdatenstrom zu lokalisieren.

11. Drahtloses unidirektionales Übertragungsverfahren nach einem der Ansprüche 8 bis 10, wobei das Sensordatenpaket in zumindest zwei Datenpakete aufgeteilt mit einer ersten Sendefrequenz und zusätzlich in zumindest drei Datenpakete aufgeteilt mit einer zweiten Sendefrequenz über den Kommunikationskanal gesendet wird;
   wobei bei dem Empfangen der Datenpakete die zumindest zwei Datenpakete auf einer ersten Sendefrequenz empfangen werden und/oder die zumindest drei Datenpakete auf der zweiten Sendefrequenz empfangen werden; und
   wobei bei dem Empfangen der Datenpakete die zumindest zwei Datenpakete und/oder die zumindest drei Datenpakete kombiniert werden, um das Sensordatenpaket zu ermitteln.

12. Drahtloses unidirektionales Übertragungsverfahren nach Anspruch 11, wobei die zumindest zwei Datenpakete mit einer ersten Code Rate codiert und die zumindest drei Datenpakete mit einer zweiten Code Rate codiert über den Kommunikationskanal gesendet werden;
   wobei bei dem Empfangen der Datenpakete die zumindest zwei Datenpakete decodiert werden und/oder die zumindest drei Datenpakete decodiert werden.

13. Drahtloses unidirektionales Übertragungsverfahren, mit folgenden Schritten:

   Ermitteln von Sensordaten mit einem Sensor;
   Bereitstellen eines Sensordatenpakets basierend auf den Sensordaten, wobei die Sensordaten eine Datenmenge von weniger als 1 kbit aufweisen;
   Erzeugen von Datenpaketen, wobei bei der Erzeugung von Datenpaketen das Sensordatenpaket in zumindest zwei Datenpakete aufgeteilt wird, und wobei jedes der zumindest zwei Datenpakete kürzer ist als das Sensordatenpaket; und
   Senden der Datenpakete mit einer Datenrate von weniger als 50 kbit/s und einem zeitlichen Abstand über einen Kommunikationskanal;
   wobei zur Synchronisation der zumindest zwei Datenpakete in einem Datenempfänger bei dem Erzeugen von Datenpaketen eine Synchronisationssequenz über die Datenpakete verteilt wird, so dass ein einzelnes Datenpaket schlechtere Synchronisationseigenschaften aufweist, als eine Synchronisation über mehrere Datenpakete.

14. Drahtloses unidirektionales Übertragungsverfahren, mit folgenden Schritten:

Ermitteln von Sensordaten mit einem Sensor;
Bereitstellen eines Sensordatenpakets basierend auf den Sensordaten, wobei die Sensordaten eine Datenmenge von weniger als 1 kbit aufweisen;
Erzeugen von Datenpaketen, wobei bei der Erzeugung von Datenpaketen das Sensordatenpaket in zumindest zwei Datenpakete aufgeteilt wird, und wobei jedes der zumindest zwei Datenpakete kürzer ist als das Sensordatenpaket; und
Senden der Datenpakete mit einer Datenrate von weniger als 50 kbit/s und einem zeitlichen Abstand über einen Kommunikationskanal;
wobei bei dem Erzeugen von Datenpaketen das Sensordatenpaket zusätzlich in zumindest drei Datenpakete aufgeteilt wird, wobei jedes der zumindest drei Datenpakete kürzer ist als das Sensordatenpaket; und
wobei bei dem Senden der Datenpakete die zumindest zwei Datenpakete mit einer ersten Sendefrequenz über den Kommunikationskanal gesendet werden und die zumindest drei Datenpakete mit einer zweiten Sendefrequenz über den Kommunikationskanal gesendet werden.

15. Computerprogramm mit einem Programmcode zur Durchführung des Verfahrens nach einem der Ansprüche 1 bis 14, wenn das Computerprogramm auf einem Computer oder Mikroprozessor abläuft.

16. Batteriebetriebene stationäre Sensoranordnung zur Durchführung einer drahtlosen unidirektionalen Übertragung, mit folgenden Merkmalen:

einem Sensor zum Ermitteln von Sensordaten und zum Bereitstellen eines Sensordatenpakets basierend auf den Sensordaten, wobei die Sensordaten eine Datenmenge von weniger als 1 kbit aufweisen;
einer Einrichtung zum Erzeugen von Datenpaketen, die ausgebildet ist, um das Sensordatenpaket in zumindest drei Datenpakete aufzuteilen, wobei jedes der zumindest drei Datenpakete kürzer ist als das Sensordatenpaket; und
einer Einrichtung zum Senden von Datenpaketen, die ausgebildet ist, um die Datenpakete mit einer Datenrate von weniger als 50 kbit/s und einem zeitlichen Abstand über einen Kommunikationskanal zu senden;
wobei die Einrichtung zum Erzeugen von Datenpaketen ausgebildet ist, um die zumindest drei Datenpakete derart kanalzucodieren, dass nur ein Anteil der Datenpakete zum Decodieren des Sensordatenpakets erforderlich ist.

17. Batteriebetriebene stationäre Sensoranordnung zur Durchführung einer drahtlosen unidirektionalen Übertragung, mit folgenden Merkmalen:

einem Sensor zum Ermitteln von Sensordaten und zum Bereitstellen eines Sensordatenpakets basierend auf den Sensordaten, wobei die Sensordaten eine Datenmenge von weniger als 1 kbit aufweisen;
einer Einrichtung zum Erzeugen von Datenpaketen, die ausgebildet ist, um das Sensordatenpaket in zumindest zwei Datenpakete aufzuteilen, wobei jedes der zumindest zwei Datenpakete kürzer ist als das Sensordatenpaket; und
einer Einrichtung zum Senden von Datenpaketen, die ausgebildet ist, um die Datenpakete mit einer Datenrate von weniger als 50 kbit/s und einem zeitlichen Abstand über einen Kommunikationskanal zu senden;
wobei die Einrichtung zum Erzeugen von Datenpaketen ausgebildet ist, um zur Synchronisation der zumindest zwei Datenpakete in einem Datenempfänger eine Synchronisationssequenz über die Datenpakete zu verteilen, so dass ein einzelnes Datenpaket schlechtere Synchronisationseigenschaften aufweist, als eine Synchronisation über mehrere Datenpakete.

18. Batteriebetriebene stationäre Sensoranordnung zur Durchführung einer drahtlosen unidirektionalen Übertragung, mit folgenden Merkmalen:

einem Sensor zum Ermitteln von Sensordaten und zum Bereitstellen eines Sensordatenpakets basierend auf den Sensordaten, wobei die Sensordaten eine Datenmenge von weniger als 1 kbit aufweisen;
einer Einrichtung zum Erzeugen von Datenpaketen, die ausgebildet ist, um das Sensordatenpaket in zumindest zwei Datenpakete aufzuteilen, wobei jedes der zumindest zwei Datenpakete kürzer ist als das Sensordatenpaket; und

einer Einrichtung zum Senden von Datenpaketen, die ausgebildet ist, um die Datenpakete mit einer Datenrate von weniger als 50 kbit/s und einem zeitlichen Abstand über einen Kommunikationskanal zu senden; wobei die Einrichtung zum Erzeugen von Datenpaketen ausgebildet ist, um das Sensordatenpaket zusätzlich in zumindest drei Datenpakete aufzuteilen, wobei jedes der zumindest drei Datenpakete kürzer ist als das Sensordatenpaket; und

wobei die Einrichtung zum Senden von Datenpaketen ausgebildet ist, um die zumindest zwei Datenpakete mit einer ersten Sendefrequenz über den Kommunikationskanal zu senden, und um die zumindest drei Datenpakete mit einer zweiten Sendefrequenz über den Kommunikationskanal zu senden.

**Claims**

1.  Wireless unidirectional method for transmission, the method comprising:

    determining sensor data with a sensor (102);
    providing a sensor data packet based on the sensor data, the sensor data comprising an amount of data of less than 1 kbit;
    generating data packets, wherein generating data packets comprises dividing the sensor data packet into at least three data packets, wherein each of the at least three data packets is shorter than the sensor data packet; and
    transmitting the data packets with a data rate of less than 50 kbit/s and a time interval via a communication channel,
    wherein generating the data packets comprises channel-encoding the at least three data packets such that only a part of the data packets is required for decoding the sensor data packet.

2.  Wireless unidirectional method for transmission according to the preceding claim, wherein transmitting the data packets comprises selecting the time interval of the data packets such that a battery load of a battery-operated stationary sensor arrangement is reduced.

3.  Wireless unidirectional method for transmission according to one of the preceding claims, wherein transmitting that data packets comprises providing the data packets with a symbol rate of less than $10^6$ symbols and/or a code rate of less than 0.8.

4.  Wireless unidirectional method for transmission according to one of the preceding claims, wherein generating data packets comprises dividing the sensor data packet additionally into at least two data packets, wherein each of the at least two data packets is shorter than the sensor data packet; and
    wherein transmitting data packets comprises transmitting the at least two data packets with a first transmission frequency via the communication channel and transmitting the at least three data packets with a second transmission frequency via the communication channel.

5.  Wireless unidirectional method for transmission according to claim 4, wherein generating data packets comprises encoding the at least two data packets with a first code rate and encoding the at least three data packets with a second code rate, wherein the first code rate is higher than the second code rate.

6.  Wireless unidirectional method for transmission according to one of the preceding claims, wherein generating data packets comprises distributing a synchronization sequence across the data packets, so that an individual data packet shows worse synchronization characteristics than the synchronization across several data packets.

7.  Wireless unidirectional method for transmission according to one of the preceding claims, wherein the data packets are distributed to different transmission frequencies, in order to be robust against interferences or other systems.

8.  Wireless unidirectional method for transmission according to one of the preceding claims, the method further comprising:

    receiving data packets, wherein receiving data packets comprises receiving at least two data packets and combining the at least two data packets in order to determine the sensor data packet; and
    reading out the sensor data packet to determine the sensor data from the sensor data packet and to allocate the sensor data to a battery-operated stationary sensor arrangement.

9. Wireless unidirectional method for transmission according to claim 8, wherein generating data packets comprises distributing a synchronization sequence across the data packets, so that an individual data packet comprises a short synchronization sequence with worse synchronization characteristics than a synchronization across several data packets; and
wherein receiving the data packets comprises localizing the data packets in a receive data stream based on the short synchronization sequences in order to receive the data packets.

10. Wireless unidirectional method for transmission according to claim 9, wherein receiving data packets comprises determining the time interval of the data packets based on the short synchronization sequences to localize the short synchronization sequences in the receive data stream.

11. Wireless unidirectional method for transmission according to one of claims 8 to 10, wherein the sensor data packet is transmitted, via the communication channel, divided into at least two data packets with a first transmission frequency and, in addition, divided into at least three data packets with a second transmission frequency;
wherein receiving the data packets comprises receiving the at least two data packets on a first transmission frequency and/or receiving the at least three data packets on the second transmission frequency; and
wherein receiving the data packets comprises combining the at least two data packets and/or the at least three data packets in order to determine the sensor data packet.

12. Wireless unidirectional method for transmission according to claim 11, wherein the at least two data packets are transmitted, via the communication channel, encoded with a first code rate and the at least three data packets are transmitted encoded with a second code rate;
wherein receiving the data packets comprises decoding the at least two data packets and/or decoding the at least three data packets.

13. Wireless unidirectional method for transmission, the method comprising:

determining sensor data with a sensor;
providing a sensor data packet based on the sensor data, wherein the sensor data comprises an amount of data of less than 1 kbit;
generating data packets, wherein generating data packets comprises dividing the sensor data packet into at least two data packets, and wherein each of the at least two data packets is shorter than the sensor data packet; and
transmitting the data packets with a data rate of less than 50 kbit/s and a time interval via a communication channel;
wherein, for distributing the at least two data packets in a data receiver, generating data packets comprises distributing a synchronization sequence across the data packets, so that an individual data packet shows worse synchronization characteristics than a synchronization across several data packets.

14. Wireless unidirectional method for transmission, the method comprising:

determining sensor data;
providing a sensor data packet based on the sensor data, wherein the sensor data comprises an amount of data of less than 1 kbit;
generating data packets, wherein generating data packets comprises dividing the sensor data packet into at least two data packets, and wherein each of the at least two data packets is shorter than the sensor data packet; and
transmitting the data packets with a data rate of less than 50 kbit/s and a time interval via a communication channel;
wherein generating data packets comprises dividing the sensor data packet additionally into at least three data packets, wherein each of the at least three data packets is shorter than the sensor data packet; and
wherein transmitting data packets comprises transmitting the at least two data packets with a first transmission frequency via the communication channel and transmitting the at least three data packets with a second transmission frequency via the communication channel.

15. Computer program having a program code for executing the method according to one of claims 1 to 14, when the computer program is executed on a computer or microprocessor.

16. Battery-operated stationary sensor arrangement for performing a wireless unidirectional transmission, comprising:

a sensor for determining sensor data and for providing a sensor data packet based on the sensor data, wherein the sensor data comprises an amount of data of less than 1 kbit;
a means for generating data packets configured to divide the sensor data packet into at least three data packets, wherein each of the at least three data packets is shorter than the sensor data packet; and
a means for transmitting data packets configured to transmit the data packets with a data rate of less than 50 kbit/s and a time interval via a communication channel;
wherein the means for generating data packets is configured to channel-encode the at least three data packets such that only a part of the data packets is required for decoding the sensor data packet.

17. Battery-operated stationary sensor arrangement for performing a wireless unidirectional transmission, comprising:

a sensor for determining sensor data and for providing a sensor data packet based on the sensor data, wherein the sensor data comprises an amount of data of less than 1 kbit;
a means for generating data packets configured to divide the sensor data packet into at least two data packets, wherein each of the at least two data packets is shorter than the sensor data packet; and
a means for transmitting data packets configured to transmit the data packets with a data rate of less than 50 kbit/s and a time interval via a communication channel;
wherein the means for generating data packets is configured to channel-encode the at least two data packets such that only a part of the data packets is required for decoding the sensor data packet.

18. Battery-operated stationary sensor arrangement for performing a wireless unidirectional transmission, comprising:

a sensor for determining sensor data and for providing a sensor data packet based on the sensor data, wherein the sensor data comprises an amount of data of less than 1 kbit;
a means for generating data packets configured to divide the sensor data packet into at least two data packets, wherein each of the at least two data packets is shorter than the sensor data packet; and
a means for transmitting data packets configured to transmit the data packets with a data rate of less than 50 kbit/s and a time interval via a communication channel;
wherein the means for generating data packets is configured to additionally divide the sensor data packet into at least three data packets, wherein each of the at least three data packets is shorter than the sensor data packet; and
wherein the means for transmitting data packets is configured to transmit the at least two data packets with a first transmission frequency via the communication channel and to transmit the at least three data packets with a second transmission frequency via the communication channel.

**Revendications**

1. Procédé de transmission unidirectionnelle sans fil, présentant le fait de:

déterminer des données de capteur par un capteur (102);
mettre à disposition un paquet de données de capteur sur base des données de capteur, les données de capteur présentant une quantité de données de moins de 1 kbit;
générer des paquets de données, où lors de la génération de paquets de données de capteur, le paquet de données de capteur est divisé en au moins trois paquets de données, chacun des au moins trois paquets de données étant plus court que le paquet de données de capteur; et
transmettre les paquets de données à un débit de données de moins de 50 kbit/s et à un intervalle de temps via un canal de communication;
dans lequel, lors de la génération de paquets de données, les au moins trois paquets de données sont codés par canal de sorte que seule une part des paquets de données soit nécessaire pour décoder le paquet de données de capteur.

2. Procédé de transmission unidirectionnel sans fil selon la revendication précédente, dans lequel, lors de la transmission des paquets de données, l'intervalle de temps des paquets de données est choisi de sorte que soit réduite une charge de batterie d'un aménagement de capteurs stationnaire fonctionnant sur batterie.

3. Procédé de transmission unidirectionnel sans fil selon l'une des revendications précédentes, dans lequel, lors de la transmission des paquets de données, les paquets de données sont pourvus d'un taux de symboles de moins de $10^6$ symbole(s) et/ou d'un taux de codage de moins de 0,8.

4. Procédé de transmission unidirectionnel sans fil selon l'une des revendications précédentes, dans lequel, lors de la génération de paquets de données, le paquet de données de capteur est en outre divisé en au moins deux paquets de données, chacun des au moins deux paquets de données étant plus court que le paquet de données de capteur; et

   dans lequel, lors de la transmission de paquets de données, les au moins deux paquets de données sont transmis à une première fréquence de transmission via le canal de communication, et

   les au moins trois paquets de données sont transmis à une deuxième fréquence de transmission via le canal de communication.

5. Procédé de transmission unidirectionnel sans fil selon la revendication 4, dans lequel, lors de la génération de paquets de données, les au moins deux paquets de données sont codés à un premier taux de codage et les au moins trois paquets de données sont codés à un deuxième taux de codage, le premier taux de codage étant supérieur au deuxième taux de codage.

6. Procédé de transmission unidirectionnel sans fil selon l'une des revendications précédentes, dans lequel, lors de la génération de paquets de données, une séquence de synchronisation est répartie sur les paquets de données, de sorte qu'un paquet de données individuel présente des propriétés de synchronisation plus mauvaises qu'une synchronisation sur plusieurs paquets de données.

7. Procédé de transmission unidirectionnel sans fil selon l'une des revendications précédentes, dans lequel les paquets de données sont répartis sur différentes fréquences de transmission, de manière à être robustes aux interférences ou à d'autres systèmes.

8. Procédé de transmission unidirectionnel sans fil selon l'une des revendications précédentes, dans lequel le procédé présente par ailleurs les étapes suivantes consistant à:

   recevoir des paquets de données, où lors de la réception de paquets de données sont reçus au moins deux paquets de données et les au moins deux paquets de données sont combinés pour déterminer le paquet de données de capteur; et

   lire le paquet de données de capteur pour déterminer les données de capteur à partir du paquet de données de capteur et pour associer les données de capteur à un aménagement de capteurs stationnaire fonctionnant sur batterie.

9. Procédé de transmission unidirectionnel sans fil selon la revendication 8, dans lequel, lors de la génération de paquets de données, une séquence de synchronisation est répartie sur les paquets de données, de sorte qu'un paquet de données individuel présente une séquence de synchronisation courte avec des propriétés de synchronisation plus mauvaises qu'une synchronisation sur plusieurs paquets de données,

   dans lequel, lors de la réception des paquets de données, les paquets de données sont localisés dans un flux de données de réception sur base des séquences de synchronisation courtes pour recevoir les paquets de données.

10. Procédé de transmission unidirectionnel sans fil selon la revendication 9, dans lequel, lors de la réception des paquets de données, l'intervalle de temps des paquets de données est déterminé sur base des séquences de synchronisation courtes pour localiser les séquences de synchronisation courtes dans le flux de données de réception.

11. Procédé de transmission unidirectionnel sans fil selon l'une des revendications 8 à 10, dans lequel le paquet de données de capteur est divisé en au moins deux paquets de données à une première fréquence de transmission et est, en outre, transmis divisé en au moins trois paquets de données à une deuxième fréquence de transmission via le canal de communication;

   dans lequel, lors de la réception des paquets de données, les au moins deux paquets de données sont reçus à une première fréquence de transmission et/ou les au moins trois paquets de données sont reçus à la deuxième fréquence de transmission; et

dans lequel, lors de la réception des paquets de données, les au moins deux paquets de données et/ou les au moins trois paquets de données sont combinés pour déterminer le paquet de données de capteur.

12. Procédé de transmission unidirectionnel sans fil selon la revendication 11, dans lequel les au moins deux paquets de données sont codés à un premier taux de codage et les au moins trois paquets de données sont transmis codés à un deuxième taux de codage via le canal de communication;
dans lequel lors de la réception des paquets de données sont décodés les au moins deux paquets de données et/ou sont décodés les au moins trois paquets de données.

13. Procédé de transmission unidirectionnel sans fil, aux étapes suivantes consistant à:

déterminer des données de capteur par un capteur;
mettre à disposition un paquet de données de capteur sur base des données de capteur, les données de capteur présentant une quantité de données de moins de 1 kbit;
générer des paquets de données, où, lors de la génération de paquets de données, le paquet de données de capteur est divisé en au moins deux paquets de données, et où chacun des au moins deux paquets de données est plus court que le paquet de données de capteur; et
transmettre les paquets de données à un taux de données de moins de 50 kbit/s et à un intervalle de temps via un canal de communication;
dans lequel, pour synchroniser les au moins deux paquets de données dans un récepteur de données, lors de la génération de paquets de données, une séquence de synchronisation est répartie sur les paquets de données, de sorte qu'un paquet de données individuel présente des propriétés de synchronisation plus mauvaises qu'une synchronisation sur plusieurs paquets de données.

14. Procédé de transmission unidirectionnel sans fil, aux étapes suivantes consistant à:

déterminer des données de capteur par un capteur;
mettre à disposition un paquet de données de capteur sur base des données de capteur, les données de capteur présentant une quantité de données de moins de 1 kbit;
générer des paquets de données, où, lors de la génération de paquets de données, le paquet de données de capteur est divisé en au moins deux paquets de données, et où chacun des au moins deux paquets de données est plus court que le paquet de données de capteur; et
transmettre les paquets de données à un taux de données de moins de 50 kbit/s et à un intervalle de temps via un canal de communication ;
dans lequel, lors de la génération de paquets de données, le paquet de données de capteur est en outre divisé en au moins trois paquets de données, chacun des au moins trois paquets de données étant plus court que le paquet de données de capteur; et
dans lequel, lors de la transmission des paquets de données, les au moins deux paquets de données sont transmis à une première fréquence de transmission via le canal de communication et les au moins trois paquets de données sont transmis à une deuxième fréquence de transmission via le canal de communication.

15. Programme d'ordinateur avec un code de programme pour réaliser le procédé selon l'une des revendications 1 à 14 lorsque le programme d'ordinateur est exécuté sur un ordinateur ou un microprocesseur.

16. Aménagement de capteurs stationnaire fonctionnant sur batterie pour la mise en oeuvre d'une transmission unidirectionnelle sans fil, aux caractéristiques suivantes:

un capteur destiné à déterminer des données de capteur et à mettre à disposition un paquet de données de capteur sur base des données de capteur, les données de capteur présentant une quantité de données de moins de 1 kbit;
un moyen destiné à générer des paquets de données qui est réalisé pour diviser le paquet de données de capteur en au moins trois paquets de données, chacun desdits au moins trois paquets de données étant plus court que le paquet de données de capteur; et
un moyen destiné à transmettre des paquets de données qui est réalisé pour transmettre les paquets de données à un débit de données de moins de 50 kbit/s et un intervalle de temps via un canal de communication;
dans lequel le moyen destiné à générer des paquets de données est réalisé pour coder par canal les au moins trois paquets de données de sorte que seule une part des paquets de données soit nécessaire pour décoder le paquet de données de capteur.

**17.** Aménagement de capteurs stationnaire fonctionnant sur batterie pour la mise en oeuvre d'une transmission unidirectionnelle sans fil, aux caractéristiques suivantes:

un capteur destiné à déterminer des données de capteur et à mettre à disposition un paquet de données de capteur sur base des données de capteur, les données de capteur présentant une quantité de données de moins de 1 kbit;

un moyen destiné à générer des paquets de données qui est réalisé pour diviser le paquet de données de capteur en au moins deux paquets de données, chacun des au moins deux paquets de données étant plus court que le paquet de données de capteur; et

un moyen destiné à transmettre des paquets de données qui est réalisé pour transmettre les paquets de données à un débit de données de moins de 50 kbit/s et à un intervalle de temps via un canal de communication;

dans lequel le dispositif destiné à générer des paquets de données est réalisé pour répartir, pour synchroniser les au moins deux paquets de données dans un récepteur de données, une séquence de synchronisation sur les paquets de données, de sorte qu'un paquet de données individuel présente des propriétés de synchronisation plus mauvaises qu'une synchronisation sur plusieurs paquets de données.

**18.** Aménagement de capteurs stationnaire fonctionnant sur batterie pour la mise en oeuvre d'une transmission unidirectionnelle sans fil, aux caractéristiques suivantes:

un capteur destiné à déterminer des données de capteur et à mettre à disposition un paquet de données de capteur sur base des données de capteur, les données de capteur présentant une quantité de données de moins de 1 kbit;

un moyen destiné à générer des paquets de données qui est réalisé pour diviser le paquet de données de capteur en au moins deux paquets de données, chacun des au moins deux paquets de données étant plus court que le paquet de données de capteur; et

un moyen destiné à transmettre des paquets de données qui est réalisé pour transmettre les paquets de données à un débit de données de moins de 50 kbit/s et à un intervalle de temps via un canal de communication;

dans lequel le moyen destiné à générer des paquets de données est réalisé pour diviser le paquet de données de capteur en outre en au moins trois paquets de données, chacun des au moins trois paquets de données étant plus court que le paquet de données de capteur; et

dans lequel le moyen destiné à transmettre des paquets de données est réalisé pour transmettre les au moins deux paquets de données à une première fréquence de transmission via le canal de communication, et pour transmettre les au moins trois paquets de données à une deuxième fréquence d'émission via le canal de communication.

100  102                          104                        106

| Sensor | Einrichtung zum Erzeugen von Datenpaketen | Einrichtung zum Senden von Datenpaketen |

FIG 1

110

100

120

batteriebetriebene
stationäre
Sensoranordnung

Datenempfänger

## FIG 2

120

122

124

Einrichtung
zum Erzeugen
von Datenpaketen

Einrichtung
zum Auslesen
des Sensordatenpakets

## FIG 3

Beispiel: Übertragung 75 Byte Datenpaket

Datenrate: 20 kBit/s
Pakelänge: 10 ms (= 200 Bit)
Gesamttelegrammlänge: 220 s (-> Updaterate ca. 4 min)

Kanal 1:
Urban
¾ Code
DC = 0,018%

Kanal 2:
Suburban
½ Code
DC = 0,027%

Kanal 3:
Rural
¼ Code
DC = 0,055%

Telegrammlänge (DC gesamt = 0,1%)

FIG 4

EP 3 002 560 B1

FIG 5

EP 3 002 560 B1

Frequenz

Sender A ▓▓▓▓▓ A: Ausgangspunkt

Sender B ▓▓▓▓▓▓▓▓▓▓▓▓▓▓ B: Verringerung der Symbolrate

Sender C ▓▓▓▓▓▓▓▓▓▓▓▓▓▓ C: Verringerung der Code Rate

Sender D ▓▓▓▓▓▓▓▓▓▓▓▓▓▓ D: Konbination von B und C

Zeit

FIG 6

Wahrscheinlichkeit Telegramm zu emprangen

FIG 7

FIG 8

EP 3 002 560 B1

Paketfehlerwahrscheinlichkeit abhängug von n, $f_N = 20{,}0$, $D_{\Sigma X} = 0{,}20$

FIG 9

Paketfehlerwahrscheinlichkeit abhängug von n, $f_N = 20{,}0$, $D_{\Sigma X} = 0{,}50$

FIG 10

Paketfehlerwahrscheinlichkeit abhängug von n, $f_N = 20{,}0$, $D_{\Sigma X} = 0{,}80$

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7057525 B2
- EP 1246501 B1

- US 20100265863 A